# EUROPÄISCHE PATENTSCHRIFT

(11) **EP 4 225 629 B1**
(45) Veröffentlichungstag und Bekanntmachung des Hinweises auf die Patenterteilung: **03.12.2025**
(21) Anmeldenummer: 21794314.1
(22) Anmeldetag: 05.10.2021
(51) Int. Cl.: B62D 59/04, B62D 53/08, G01L 5/24

(54) **SCHRAUBE MIT DEHNMESSSTREIFEN, SCHRAUBVERBINDUNG, KÖNIGSZAPFEN UND MAULKUPPLUNG HIERMIT**
SCREW WITH STRAIN GAUGE, SCREW CONNECTION, KINGPIN AND OPEN-END COUPLING COMPRISING SAME
VIS À JAUGE DE CONTRAINTE, ASSEMBLAGE PAR VIS, PIVOT D'ATTELAGE ET ATTELAGE À MÂCHOIRE LES COMPRENANT

(30) Priorität: 08.10.2020 DE 102020126374
(43) Veröffentlichungstag der Anmeldung: 16.08.2023
(73) Patentinhaber: Trailer Dynamics GmbH, 52249 Eschweiler (DE)
(72) Erfinder: JABER, Abdullah, 52066 Aachen (DE)
(74) Vertreter: Patentanwälte Olbricht Buchhold Keulertz
(86) Internationale Anmeldenummer: PCT/EP2021/077465
(87) Internationale Veröffentlichungsnummer: WO 2022/074010

(56) Entgegenhaltungen:
- EP-A1- 3 517 327
- CN-A- 109 738 106
- CN-U- 203 035 702
- DE-A1- 102017 102 360
- DE-A1- 102017 110 520
- DE-A1- 3 907 763
- JP-A- S5 895 235
- US-A1- 2018 073 542
- US-A1- 2019 300 078

## Beschreibung

Die Erfindung betrifft eine sensorische Schraube gemäß dem Oberbegriff von Anspruch 1, eine Schraubverbindung hiermit nach Anspruch 11, einen Königszapfen nach Anspruch 16 und eine Maulkupplung nach Anspruch 20 jeweils mit einer solchen Schraubverbindung und ein Verfahren zum Betrieb eines Fahrzeugs nach Anspruch 21, bei dem eine solche Schraubverbindung eingesetzt wird.

Sattelkupplungen dienen der Verbindung eines Anhängers mit einer Zugmaschine. Typischerweise ist eine Sattelplatte auf Seiten der Zugmaschine montiert, in die ein Königszapfen (auch als Königsbolzen oder Zugsattelzapfen bezeichnet) eingeschoben und gesichert werden kann. Über diesen Königszapfen und die Sattelplatte werden dann sämtliche fahrdynamischen Lasten von der Zugmaschine auf den Sattelauflieger und umgekehrt übertragen. Gleichzeitig werden nur sehr wenige Daten von der Zugmaschine an den Sattelauflieger übermittelt und umgekehrt, die beispielsweise in die Antriebs- und Bremssteuerung sowie Fahrsicherheitsprogramme einfließen können. Es gibt schlichtweg keine standardisierten Datenprotokolle, denn die Sattelauflieger werden von abweichenden Herstellern angeboten als die Zugmaschinen.

Königszapfen für Sattelkupplung weisen einen Zapfenkopf an einem Zapfenschaft auf. Am gegenüberliegenden Ende hat der Königszapfen einen Befestigungsfuß, mit dem er mechanisch an einer Karosserie bzw. an einem Fahrgestell eines Sattelaufliegers festgelegt wird.

Um für den Antrieb einer Hilfsantriebsachse des Sattelaufliegers Daten zu gewinnen, mit der die Hilfsantriebsachse ohne eigentliche Antriebssignale der Zugmaschine unterstützend betrieben werden kann, wird von DE 102017 110 520 A1 vorgeschlagen, Kräfte am aufliegerseitigen Königszapfen zu erfassen, um daraus zu schließen, was die Zugmaschine gerade macht. In Kenntnis dessen, ob die Zugmaschine gerade bremsend, ziehend oder richtungsändernd auf den Sattelauflieger einwirkt, kann die Hilfsantriebsachse schiebend oder bremsend betrieben werden. Als Sensoren zur Erfassung der Kräfte schlägt DE 10 2017 110 520 A1 Dehnmessstreifen, Kraftmessdosen, Messunterlegscheiben und Piezosensoren vor.

In der Variante mit den Messunterlegscheiben werden diese in die Schraubverbindung zwischen dem Königszapfen und dem Sattelauflieger eingebaut und messen so die Spannkräfte der Schrauben. Indem die Schrauben verteilt um den Königszapfen angeordnet sind, lässt sich von den Zug- und Druckkräften in den Messunterlegscheiben auf die auf den Königszapfen wirkenden Kräfte schließen.

Soweit die Einbauten dieser Sensoren von DE 10 2017 110 520 A1 überhaupt beschrieben sind, stellen sie sich jedoch als aufwändig zu montieren und zu warten dar. Außerdem sind der Königszapfen als solches und auch die Sensoren jeweils Verschleißteile, die separat auswechselbar sein müssen. Hinsichtlich der einfachen Installation und des Aufwands der damit verbundenen Verkabelung liefert DE 10 2017 110 520 A1 keine zufriedenstellenden Lösungen. Ferner ist der Königszapfen von einer Aufliegeplatte umgeben, die wiederum auf einer Sattelplatte der Zugmaschine anliegt und sich auf dieser frei drehen kann. Dieser Umstand erschwert die Signalführung von Sensoren, die unterhalb der Aufliegeplatte angeordnet sind.

Darüber hinaus offenbart beispielsweise DE 10 2017 102 360 A1 eine Messvorrichtung zur Bestimmung der Vorspannkraft von Schrauben, welche auch zur Bestimmung einer überelastischen Betriebsbeanspruchung, insbesondere von Schrauben, geeignet ist.

Ferner wird in DE 39 07 763 A1 eine Vorrichtung zum Bestimmen der Deichselkräfte eines Anhängers beschrieben. Die Vorrichtung umfasst dabei eine mit einem Zugfahrzeug verbundene Kupplung und Deichsel. Zur Messung der einwirkenden Deichselkräfte ist an einer Gabelklaue ein Dehnungsmessstreifen angeordnet.

Aufgabe der vorliegenden Erfindung ist es daher, eine Lösung bereitzustellen, mit der eine Kraftmessung auf einfache Weise kostengünstig und leicht montierbar gelingt, insbesondere auch im Wartungsfall. Zudem soll eine zuverlässige Signalführung der Sensoren gewährleistet sein. Die Lösung soll sich insbesondere für den Einsatz in Anhängerkupplungen und für den Betrieb von autark agierenden Zusatzantrieben eignen.

Hauptmerkmale der Erfindung sind im kennzeichnenden Teil von Anspruch 1 sowie den Ansprüchen 11, 16, 20 und 21 angegeben. Ausgestaltungen sind Gegenstand der Ansprüche 2 bis 10, 12 bis 15, 17 bis 19 sowie der Beschreibung.

Die Erfindung betrifft eine sensorische Schraube, vorzugsweise zur Festlegung eines Königszapfens an einem Sattelauflieger, einer Sattelzugmaschine oder einem sonstigen Fahrzeug, mit einem Schraubenkopf, einem sich an den Schraubenkopf entlang einer Schraubenachse anschließenden Schraubenschaft und einem am Schraubenschaft ausgebildeten Gewinde. Außerdem weist die sensorische Schraube eine Messeinrichtung mit einem Dehnmesstreifen auf, der entlang oder im inneren des Schraubenschaftes angeordnet ist und Dehnungen des Schraubenschaftes in Richtung der Schraubenachse erfasst, wobei die Messeinrichtung wenigstens zwei elektrische Anschlüsse aufweist, die als Kontaktstellen auf einer Außenseite der sensorischen Schraube liegen. Hier sind sie bevorzugt derart angeordnet, dass sie beim Einbringen der sensorischen Schraube in eine Fassung mit zwei korrelierenden elektrischen Kontakten der Fassung in Kontakt treten.

Damit lässt sich die sensorische Schraube in der Art einer Glühbirne einschrauben und entnehmen, ohne dass sich separat um elektrische Kontakte oder etwaige Verkabelungen gekümmert werden müsste. Mit Blick auf den zugrundeliegenden Einsatzzweck im Bereich eines Königszapfens hat diese Schraube weitere erhebliche Vorteile. Der Königszapfen ist nämlich ein Verschleißteil, das recht preiswert ist (derzeit circa 20 Euro) und im Durchschnitt alle 6 - 7 Monate bei jeder verpflichtenden technischen Überprüfung getauscht wird. Der Königszapfen unterliegt dem unmittelbaren Einfluss der Kupplungskräfte, wodurch er sich mit der Zeit verformt und abnutzt. Eine direkte Sensierung dieses Verschleißelements wäre daher unwirtschaftlich und würde Änderungen des Königszapfens notwendig machen. Mit der erfindungsgemäßen sensorischen Schraube ist dies nicht notwendig. Vielmehr wird eine herstellerunabhängige Wahl der Ersatzteile sichergestellt.

Zudem würde eine potentielle unmittelbare Sensierung des Königszapfens einen Tausch dieses Verschleißelements schwierig machen, weil ein einfaches Abschrauben des alten Bauteils und eine Verschraubung des neuen Bauteils nicht mehr ausreichen würde. Zusätzlich wäre eine Trennung der Zuleitungen der Sensoren und eine Neukontaktierung der Zuleitungen mit den neuen Sensoren des neuen Verschleißelements notwendig. Mit den außenliegenden Kontaktstellen der erfindungsgemäßen sensorischen Schraube kann dagegen ein gängiger, preiswerter Königszapfen einfach wie bisher getauscht werden und es ist keine zusätzliche Verkabelung zu leisten. Selbst für den Fall eines Verschleißes des Dehnmessstreifens ist kein aufwendiger Tausch des gesamten Königszapfens notwendig, sondern nur betroffene sensorische Schraube zu tauschen.

Aufgrund der sensorischen Eigenschaften der Schraube, kann die Schraube auch als sensorische Schraube, Schraubvorrichtung oder Sensoreinrichtung in der Form einer Schraube bezeichnet werden. Der Begriff Schraube bezieht sich auch auf solche Ausführungen, die nur ein Teilgewinde aufweisen oder als Schraubbolzen bezeichnet werden. Die vorliegend gewählte Bezeichnung Schraube soll unterstreichen, dass es primäre Aufgabe von dieser ist, eine Schraubverbindung herzustellen. Die Ermittlung der Dehnungen ist eine Zusatzfunktion, um die auftretenden Belastungen zu erfassen.

Gemäß einer näheren Ausgestaltung der sensorischen Schraube ist der Dehnmessstreifen im Kern des Schraubenschaftes angeordnet, vorzugsweise in einer zylindrischen Öffnung wie bspw. einem Rundloch und/oder Sackloch, das sich entlang der Schraubenachse, vorzugsweise koaxial, durch den Schraubenschaft erstreckt,. Damit ist der Dehnmessstreifen gut geschützt vor äußeren Einflüssen. Bei koaxialer Anordnung führen außerdem unabhängig von der Drehwinkelstellung der sensorischen Schraube auch Dehnungen mit Biegung der sensorischen Schraube zu gleichen Messergebnissen.

Vorzugsweise wird der Dehnmessstreifen in dem Loch eingeklebt oder eingekittet. Vorzugsweise erstreckt sich das optionale Loch nicht durch den Schraubenkopf, und besonders bevorzugt ausgehend vom dem Schraubenkopf abgewendeten Ende des Schraubenschaftes, beispielsweise bis zumindest in die Nähe des Schraubenkopfes.

Bevorzugterweise ist in die sensorische Schraube eine Signalelektronik integriert, die insbesondere eine Viertelbrücke, einen Signalverstärker und einen Signalwandler aufweist. Die Signalelektronik ist kann dadurch direkt mit dem Dehnmessstreifen verbunden werden, so dass eine nahezu verlustfreie Übertragung des analogen Signals des Dehmesstreifens zur Signaleleketronik möglich ist, die üblicherweise daraus ein aufgearbeitetes digitales Signal generiert. Dadurch können auch relativ schwache Ausgangssignale zuverlässig und relativ störungsfrei verarbeitet werden. Ferner kann mit mit geringem Aufwand eine Selbstkalibrierung erfolgen.

Erfindungsgemäß ist ferner vorgesehen, dass die Kontaktstellen jeweils an dem Ende des Schraubenschaftes angeordnet sind, das dem Schraubenkopf gegenüberliegt. Vorzugsweise können die Kontaktstellen insbesondere eine elektrisch leitfähige und antistatische Beschichtung aufweisen. Dabei weist die Beschichtung beispielsweise ein Material aus PTFE und/oder PFA auf. Dieser Bereich ist typischerweise mechanisch unbelastet, sodass die Kontaktstellen das Material der Schraube hier wesentlich unkritischer schwächen als es im Bereich des Schraubenkopfes der Fall wäre. Theoretisch wäre aber auch letzteres denkbar. Durch das Vorsehen einer Beschichtung kann die Güte des Kontakts verbessert werden, da die Kontaktstellen vor Verschmutzungen und Einflüssen wie Feuchtigkeit oder Fettschichten geschützt werden.

Im Speziellen können die Kontaktstellen jeweils die Schraubenachse ringförmig umgebend am Umfang der sensorischen Schraube ausgebildet sein. Auf diese Weise wird eine drehwinkelunabhängige Kontaktierung ermöglicht.

Dabei besteht die Möglichkeit, dass wenigstens eine, vorzugsweise alle, der Kontaktstellen durch jeweils einen Kontaktring ausgebildet sind, wobei die Kontaktringe dann bevorzugt durch Isolatorringe voneinander getrennt sind. D die Kontaktringe und die Isolatorringe können in diesem Fall auf einem elektrischen Isolator sitzen, der vorzugsweise gut wärmeleitend ist. Zumindest einer der Kontaktringe kann scheibenförmig, kappenförmig, hutförmig oder dgl. sein, um auch eine Kontaktstelle auszubilden, die in Richtung der Schraubenachse des Schraubenschaftes weist.

Der besagte elektrische Isolator kann an dem Ende des Schraubenschafts angeordnet sein, das dem Schraubenkopf gegenüberliegt.

Typischerweise bestehen Schrauben vollständig aus Metall, hier wäre dies aufgrund der enthaltenen Messeinrichtung möglichst nur teilweise der Fall. In seltenen Fällen könnten die sensorischen Schrauben beispielsweise auch im Wesentlichen aus Kunststoff oder Keramik hergestellt werden. Die elektrischen Kontakte und die isolierenden Bauteile können entweder auf einem Absatz des Hauptschaftes, der sich vom Schraubenkopf wegerstreckt, sitzen, oder sie schließen sich in Richtung der Schraubenachse an den Hauptschaft an.

Um die elektrischen Kontakte beim Einschrauben möglichst nicht zu beschädigen, bietet sich eine Ausgestaltung an, gemäß der das Gewinde einen Innendurchmesser aufweist, der größer ist als der maximale Abstand der Kontaktstellen von der Schraubenachse. Damit werden die Kontaktstellen beim Einschrauben nicht mechanisch vom Gegengewinde belastet.

In einer Variante ist eine Kontaktstelle, die ganz an dem Ende der sensorischen Schraube, das dem Schraubenkopf gegenüberliegt, sitzt, kappenförmig oder hutförmig ausgebildet. Damit muss diese Kontaktstelle nicht vom Umfang her kontaktiert werden, sondern es genügt, diese in Richtung der Längsachse der sensorischen Schraube gegen einen Gegenkontakt zu bewegen.

Ergänzend kann die Messeinrichtung einen Temperatursensor aufweisen, der die Temperatur des Schraubenschaftes und/oder des Dehnmessstreifens erfasst. Eine Messung der Temperatur des Schraubenschaftes und/oder des Dehnmessstreifens ist vorteilhaft, da diese den k-Faktor beeinflusst. Der temperaturabhängige k-Faktor ist der wesentliche Zusammenhang zwischen Dehnung und Widerstandsänderung. Der Temperaturkoeffizient des k-Faktors verfälscht das Messergebnis des Dehnungsmessstreifens der sensorischen Schraube. Eine Kalibrierung und eine rechnerische Kompensation bei Messung der Temperatur behebt dies. Zudem erwärmt sich der Dehnungsmessstreifen in der Sensorschraube gegenüber dem Material der Schraube und dem Messkörper (bspw. Königszapfen oder Kupplung) alleine durch die Speisespannung. Je nach Wärmeleitfähigkeit des isolierenden Klebstoffsubstrats und dem Material der sensorischen Schraube und dem Messkörper (bspw. Königszapfen oder Kupplung) wird die Wärmeleistung graduell an den Messkörper abgegeben. Ein Temperatur-Delta bleibt jedoch bestehen. Bei schlecht wärmeleitendem Klebstoffsubstrat oder gar einer schlechten Wärmeleitung des Materials der Schraube oder eine schlechte Wärmeleitung des Messkörpers (bspw. Königszapfen oder Kupplung) kann es zu einem Temperaturunterschied zwischen Messkörper und Dehnungsmessstreifen kommen. Dies stört womöglich die Funktionsweise des selbstkompensierenden Dehnungsmessstreifens. Diesem Effekt kann Rechnung getragen werden durch eine Temperaturmessung des Dehnungsmessstreifens und dem Schraubenschaft oder Schraubenkopf. Zudem werden mit zunehmender Temperatur die isolierenden Klebsubstrate weich und können die Dehnung des Schraubenschaftes nicht mehr zu 100% übertragen. Damit sind sie vergleichbar mit einem sinkenden k-Faktor.

Weiterhin ermöglicht der Temperatursensor, die Temperaturabhängigkeit des E-Modul des Dehnmessstreifens und der sensorischen Schraube zu berücksichtigen. Das E-Modul beschreibt den Zusammenhang zwischen der gemessenen Dehnung und der mechanischen Spannung. Der Temperaturabhängigkeit des E-Moduls der sensorischen Schraube lässt sich so rechnerisch durch die Messung der Temperatur Rechnung getragen. Ergänzend lässt sich eine Kompensation der Temperaturabhängigkeit des Dehnungsmessstreifens mittels temperaturabhängigen Nickelelementen in der Messbrücke erzielen oder durch einen digitalen Abgleich eines variablen Widerstands in der Messbrücke erreichen.

Die Erfindung betrifft außerdem eine Schraubverbindung mit einer sensorischen Schraube, wie sie vor- und nachstehend beschrieben ist, und einer Fassung, wobei die Fassung wenigstens zwei elektrische Kontakte aufweist und jeweils eine der Kontaktstellen der sensorischen Schraube mit einem der elektrischen Kontakte der Fassung kontaktiert ist, wenn sich die sensorische Schraube in einer Montageposition relativ zur Fassung befindet. Bildlich gesprochen könnte man dies mit einer Glühbirne in einer entsprechenden Fassung vergleichen. Es wird also ein wiederholbares, einfaches und prozesssicheres Kontaktieren der Kontaktstellen ermöglicht, indem man die sensorische Schraube wie üblich durch einfaches Drehen bedient. Die Fassung muss hierzu nicht als solches ein Innengewinde für die sensorische Schraube aufweisen. Es genügt, wenn ein solches in einem angrenzenden Bauteil ausgebildet ist.

Fernerhin können die zwei elektrischen Kontakte der Fassung durch Kontaktfedern ausgebildet sein. Hierdurch wird der elektrische Kontakt auch bei Vibrationen sicher hergestellt bzw. aufrecht erhalten.

Vorzugsweise ist die Fassung in der Montageposition an dem Ende des Schraubenschaftes angeordnet, das dem Schraubenkopf gegenüberliegt. Hier stört die Fassung nicht beim Betätigen der sensorischen Schraube und liegt im tendenziell deutlich weniger belasteten Bereich der Schraubverbindung.

Optional weist die Fassung ein Fassungsgehäuse auf, in dem die elektrischen Kontakte angeordnet sind. Hierdurch sind die elektrischen Kontakte vor äußeren Einflüssen geschützt.

Für den Servicefall kann die Fassung optional einen Gehäusedeckel aufweisen, der das Fassungsgehäuse zumindest einseitig schließt. Vorzugsweise ist das Gehäuse mit Ausnahme eines Eintrittslochs für die sensorische Schraube geschlossen ausgebildet.

Die Erfindung betrifft außerdem einen Königszapfen für eine Sattelkupplung, mit einer Zapfenwelle, an dessen erstem Ende ein Zapfenkopf angeordnet ist und an dessen zweitem Ende ein Befestigungsflansch angeordnet ist, wobei der Befestigungsflansch wenigstens ein, vorzugsweise wenigstens zwei, weiter bevorzugt wenigstens drei und besonders bevorzugt wenigstens vier Schraublöcher aufweist, und mit wenigstens einer Schraubverbindung wie sie vor- und nachstehend beschrieben ist, wobei die sensorische Schraube dieser Schraubverbindung durch eines der Schraublöcher ragt. Damit lassen sich auf einfache Weise Daten darüber gewinnen, wie der Königszapfen belastet wird, insbesondere durch die fahrdynamischen Wechselwirkungen zwischen Zugmaschine und Sattelauflieger. Vorzugsweise ist für wenigstens zwei, weiter bevorzugt wenigstens drei, noch weiter bevorzugt wenigstens vier und besonders bevorzugt für jedes Schraubloch eine Schraubverbindung wie vorstehend angegeben vorgesehen.

In einer speziellen Ausführung weist dieser Königszapfen einen Lagerteller auf und die sensorische Schraube ragt durch ein Schraubloch im Lagerteller. Der Lagerteller kann austauschbar ausgebildet sein, oder ist als Teil des Fahrgestells eines Fahrzeugs ausgebildet. Bevorzugt sind in den Schraublöchern des Lagertellers Innengewinde für das Gewinde der sensorischen Schraube vorgesehen. Damit sind keine separaten Muttern erforderlich.

Gemäß einer Ausführungsvariante ist der Schraubenkopf der sensorischen Schraube auf der Seite des Befestigungsflansches angeordnet und die sensorische Schraube ragt aus dem Schraubloch des Lagertellers, wobei die Fassung an dem Ende des Schraubenschafts angeordnet ist, das dem Schraubenkopf gegenüberliegt.

Dabei kann die Fassung an dem Lagerteller festgelegt sein, insbesondere auf dessen Rückseite (betrachtet aus der Einschraubrichtung). Entsprechend muss sich bei einem Tausch der Zapfenwelle nebst Kopf und Flansch nicht um die Positionierung der Fassung gekümmert werden. Diese verändert sich nämlich nicht relativ zum Lagerteller.

Eine besondere Ausgestaltung der Erfindung sieht vor, dass ein Sattelauflieger mit Hilfsantrieb, folgendes umfasst:
- einen Königszapfen, der mechanisch mit einer Karosserie des Sattelaufliegers verbunden ist;
- zumindest eine sensorische Schraubverbindung wie sie vor- und nachstehend beschrieben ist, und die mit dem Königszapfen gekoppelt und dazu ausgebildet ist, auf den Königszapfen einwirkende Kräfte zu ermitteln;
- einen Elektromotor, der mit mindestens einem Rad des Sattelaufliegers gekoppelt ist, und
- eine Steuereinheit, die dazu ausgebildet ist, den Elektromotor anzusteuern, basierend auf von der zumindest einen sensorischen Schraubverbindung ermittelten Daten, einen Fahrzustand des Sattelaufliegers zu ermitteln, und abhängig von dem ermittelten Fahrzustand den Elektromotor im Vortriebbetrieb, im Generatorbetrieb oder in einem Leerlaufbetrieb zu betreiben.

In einer alternativen Ausgestaltung betrifft die Erfindung eine Maulkupplung mit einem Kupplungsmaul und einem Befestigungsflansch (insbesondere unmittelbar oder mittelbar, bspw. über ein Drehgelenk, am Kupplungsmaul), der wenigstens ein, vorzugsweise wenigstens zwei, weiter bevorzugt wenigstens drei und besonders bevorzugt wenigstens vier Schraublöcher aufweist, und mit wenigstens einer Schraubverbindung wie sie vor- und nachstehend beschrieben ist, wobei die sensorische Schraube dieser Schraubverbindung durch jeweils eines der Schraublöcher ragt. Vorzugsweise ist für wenigstens zwei, weiter bevorzugt wenigstens drei, noch weiter bevorzugt wenigstens vier und besonders bevorzugt für jedes Schraubloch eine Schraubverbindung wie vorstehend angegeben vorgesehen. Die Anordnung der Fassung und die weiteren Detailgestaltungen können entsprechend dem Königszapfen erfolgen.

Schließlich betrifft die Erfindung auch ein Verfahren zum Betrieb eines Fahrzeugantriebs eines Fahrzeugs, wobei das Fahrzeug eine sensorische Schraubverbindung, wie sie vor- und nachstehend beschrieben ist, oder/und einen Königszapfen wie er vor- und nachstehend beschrieben ist, oder/und eine Maulkupplung wie sie vor- und nachstehend beschrieben ist, aufweist, wobei eine Antriebssteuereinheit einen Antriebsparameter des Fahrzeugantriebs in Abhängigkeit eines Messsignals der Messeinrichtung bestimmt, bspw. berechnet. Damit kann bspw. auf einfache Weise ein intelligenter Zusatzantrieb betrieben werden, ohne dass es einer umfangreichen Einbindung in den Hauptantrieb bedarf.

Im Besonderen kann das Verfahren folgendes umfassen:
- ein direktes oder indirektes Messen von mindestens einer Kraft, die auf einen Anhänger wirkt;
- ein Ermitteln eines Fahrzustandes des Anhängers basierend auf der mittels der sensorischen Schraubverbindung gemessenen Kraft;
- ein Ansteuern eines mit einem Rad des Anhängers gekoppelten Elektromotors derart, dass abhängig von dem ermittelten Fahrzustand der Elektromotor im Vortriebsbetrieb, im bremsenden Generatorbetrieb oder in einem Leerlaufbetrieb betrieben wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Längsschnitt durch eine sensorische Schraube;
- Fig. 2: eine perspektivische Ansicht eines Teils der sensorischen Schraube nach Fig. 1;
- Fig. 3: eine Seitenansicht eines anderen Teils der sensorischen Schraube nach Fig. 1;
- Fig. 4: eine Seitenansicht der sensorischen Schraube nach Fig. 1, die einem Zusammenbau der Teile gemäß den Fig. 2 und 3 entspricht;
- Fig. 5: eine perspektivische Ansicht von schräg unten eines Königszapfens;
- Fig. 6: eine perspektivische Ansicht von schräg oben des Königszapfens nach Fig. 5;
- Fig. 7: einen Teilschnitt durch eine Schraubverbindung des Königszapfens nach den Fig. 5 und 6;
- Fig. 8: eine perspektivische Ansicht einer Maulkupplung.

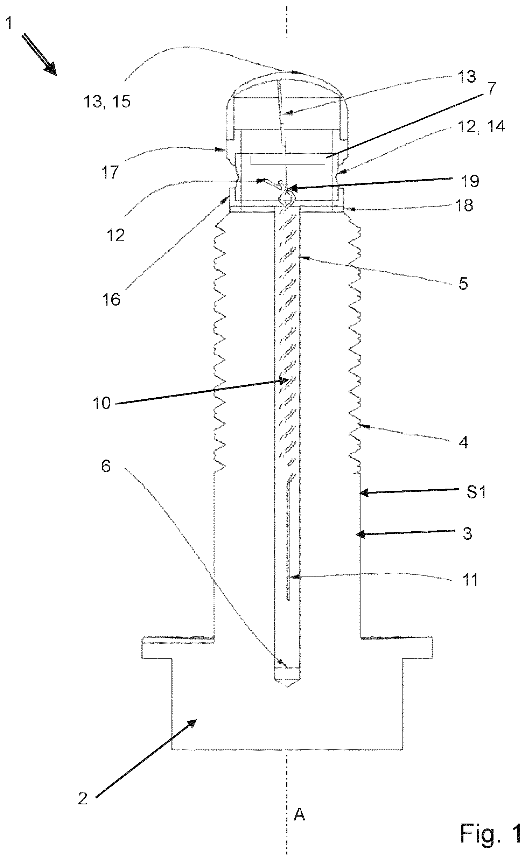

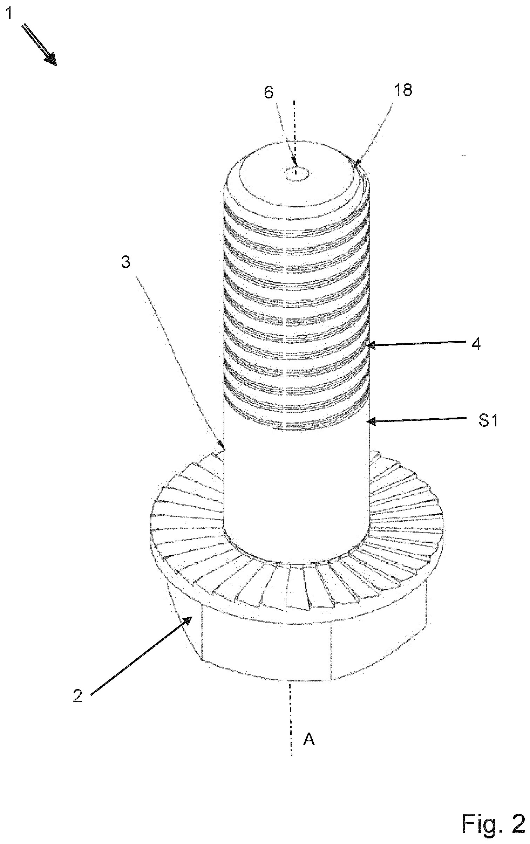

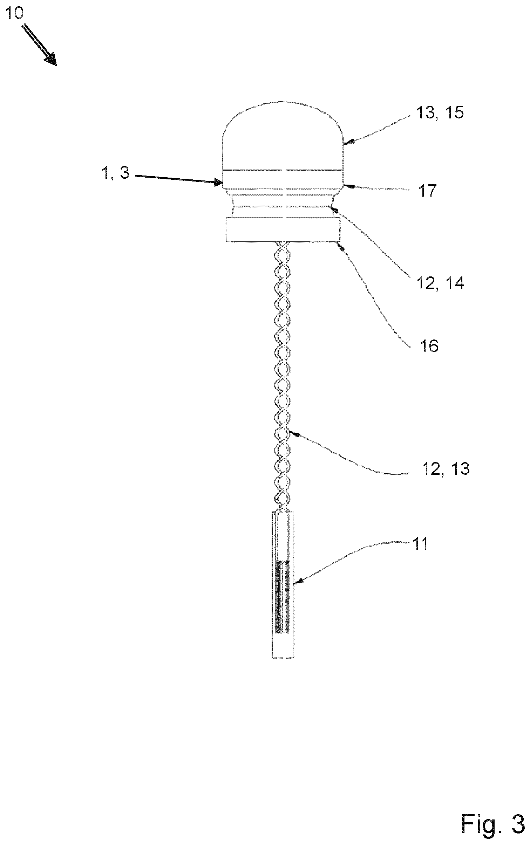

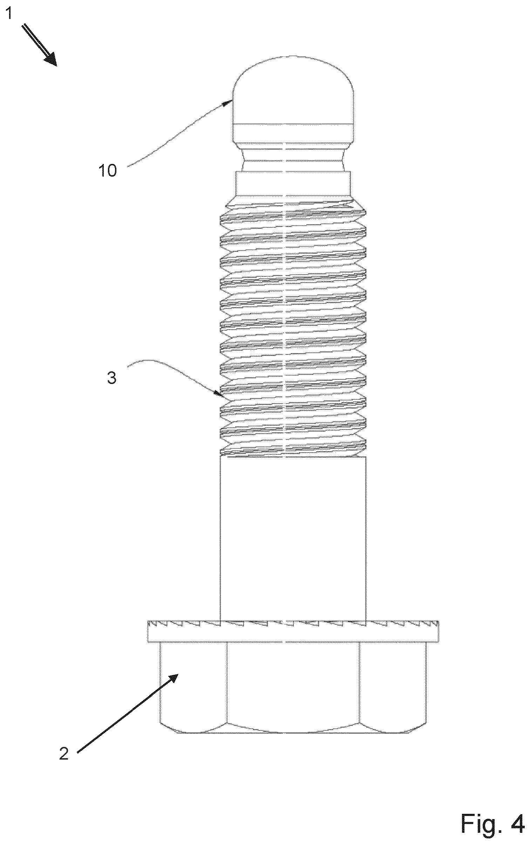

Die **Fig. 1** **und** **4** zeigen jeweils eine sensorische Schraube 1, einmal in einer Schnittansicht und einmal in einer perspektivischen Ansicht. In den **Fig. 2** **und** **3** ist jeweils ein Bestandteil dieser sensorischen Schraube 1 gezeigt, die sich wiederum zu der sensorischen Schraube 1 zusammenfügen lassen. Die **Fig. 1****,** **2****,** **3** **und** **4** werden daher gemeinsam beschrieben. Gleiche Bezugsziffern kennzeichnen hier gleiche Bauteile.

In den **Fig. 1****,** **2** **und** **4** sieht man eine sensorische Schraube 1 mit einem Schraubenkopf 2, einem sich an den Schraubenkopf 2 entlang einer Schraubenachse A anschließenden Schraubenschaft 3 und einem am Schraubenschaft 3 ausgebildeten Gewinde 4. Wie man in den Fig. 1 und 2 sieht, ist im Kern 5 des Schraubenschaftes 3 ein koaxial zur Schraubenachse A verlaufendes Loch 6 und eine Signalelektronik 7 ausgebildet.

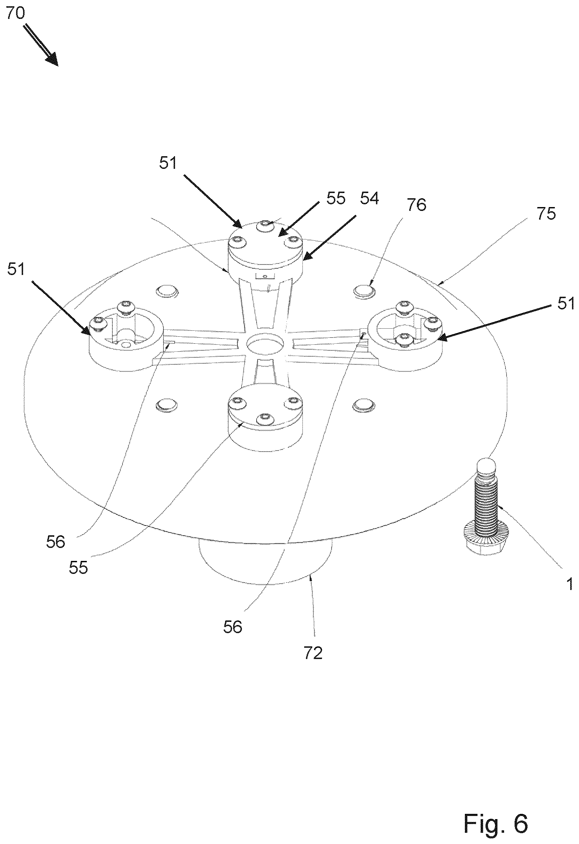

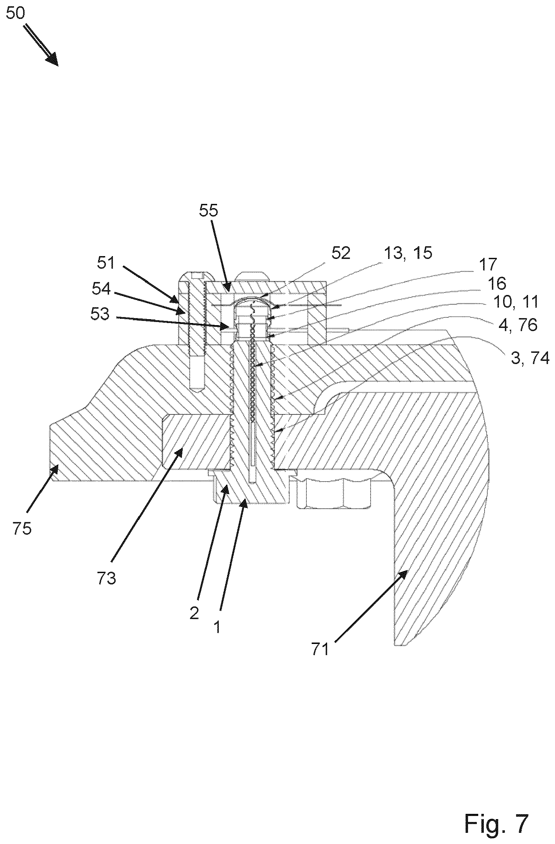

In diesem Loch 6 ist gemäß Fig. 1 ein Dehnmessstreifen 11 einer Messeinrichtung 10, wie er auch in Fig. 3 dargestellt ist, eingeklebt. Der Dehnmesstreifen 11 erstreckt sich entlang und im Inneren des Schraubenschaftes 3 und erfasst Dehnungen des Schraubenschaftes 3 zumindest in Richtung der Schraubenachse A. Die Messeinrichtung 10 und im Besonderen der Dehnmessstreifen 11 hat zwei elektrische Anschlüsse, die als Kontaktstellen 12, 13 auf einer Außenseite S1 der Schraube 1 liegen. Sie sind derart angeordnet, dass sie beim Einbringen der sensorischen Schraube 1 in eine Fassung (vgl. Bezugsziffer [Bz.] 51 in den Fig. 6 und 7) mit zwei korrelierenden elektrischen Kontakten (vgl. Bz. 52, 53 in Fig. 7) der Fassung in Kontakt treten.

Die Kontaktstellen 12, 13 der Messeinrichtung 10 sind jeweils an dem Ende des Schraubenschaftes 3 angeordnet, das dem Schraubenkopf 2 gegenüberliegt, und sind jeweils die Schraubenachse A ringförmig umgebend am Umfang der Schraube 1 ausgebildet. Dabei sind alle der Kontaktstellen 12, 13 durch einen Kontaktring 14, 15 ausgebildet, wobei die Kontaktringe 14, 15 durch Isolatorringe 16, 17 voneinander getrennt sind. Die ganz an dem Ende der Schraube 1, das dem Schraubenkopf 2 gegenüberliegt, sitzende Kontaktstelle 13 bzw. der entsprechende Kontaktring 15 ist kappenförmig bzw. hutförmig ausgebildet. Hierdurch kann er auch aus der Längsrichtung kontaktiert werden.

Die Kontaktringe 14, 15 und die Isolatorringe 16, 17 sitzen auf einem elektrischen Isolator 18, der gut wärmeleitend ist. Die Kontaktringe 14, 15, die Isolatorringe 16, 17 und der elektrische Isolator 18 bilden gewissermaßen einen Fortsatz des Schraubenschaftes 3 aus, der dem Abschnitt mit dem Gewinde 4 vorgelagert ist. Erkennbar hat das Gewinde 4 einen Innendurchmesser, der größer ist als der maximale Abstand der Kontaktstellen 12, 13 von der Schraubenachse A.

In Fig. 1 ist zudem angedeutet, dass die Messeinrichtung 10 der sensorischen Schraube 1 einen Temperatursensor 19 aufweist, der die Temperatur des Schraubenschaftes 3 und/oder des Dehnmessstreifens 11 erfasst.

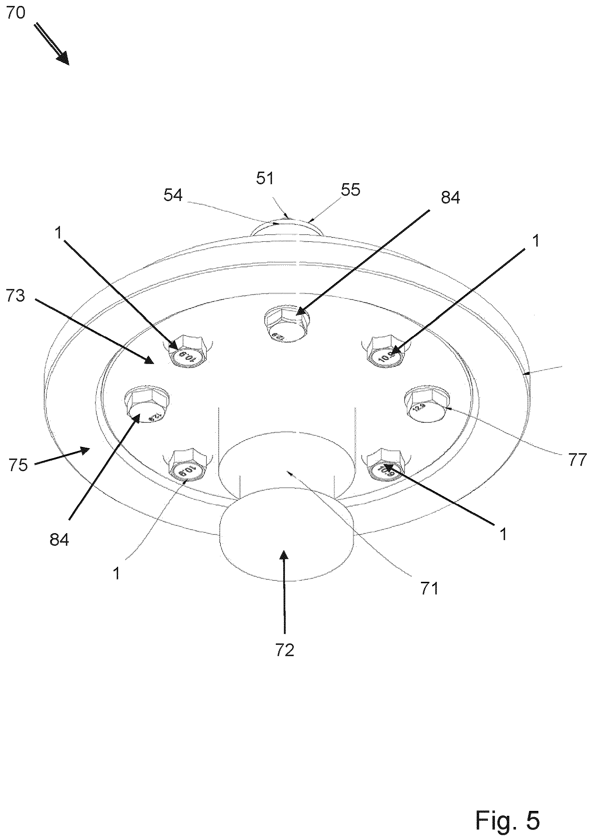

Die **Fig. 5****,** **6** **und** **7** betreffen alle einen Königszapfen 70 mit einer Schraubverbindung 50. Der Königszapfen 70 für eine Sattelkupplung hat eine Zapfenwelle 71, an deren erstem Ende ein Zapfenkopf 72 und an dessen zweitem Ende ein Befestigungsflansch 73 angeordnet ist. Diese Bauteile können einteilig ausgebildet sein.

Der Befestigungsflansch 73 weist acht Schraublöcher 74 auf, die kreisförmig und gleichverteilt um die Zapfenwelle 71 angeordnet sind. Diese haben kein Innengewinde, sondern sind glatt ausgebildet. Der Königszapfen 70 weist außerdem einen Lagerteller 75 auf, der zu jedem der Schraublöcher 74 des Befestigungsflansches 73 ein korrespondierendes Schraubloch 76 mit Innengewinde aufweist.

In die acht Schraublöcher 74 des Befestigungsflansches 73 ist jeweils eine Schraube 1, 77 eingesteckt und in das Innengewinde eines der Schraublöcher 76 des Lagertellers 75 eingeschraubt. Jede zweite der Schrauben 1, 77 ist eine Schraube 77 ohne Messeinrichtung.

Dazwischen liegt jeweils eine sensorische Schraube 1, wie sie in den Fig. 1 bis 4 gezeigt ist. Diese Schrauben 1 ragen mit den Kontaktstellen 12, 13 durch den Lagerteller 75. Zur Ausbildung einer Schraubverbindung 50 mit den gewünschten elektrischen Kontakten ist hier jeweils eine Fassung 51 angeordnet, die zwei elektrische Kontakte 52, 53 aufweist, welche jeweils eine der Kontaktstellen 12, 13 der sensorischen Schraube 1 kontaktieren. Nur andeutungsweise ist in Fig. 7 zu erkennen, dass die elektrischen Kontakte 52, 53 der Fassung 51 jeweils durch eine Kontaktfeder ausgebildet sind. Die Fassung 51 liegt in der gezeigten Montageposition also an dem Ende des Schraubenschaftes 3, das dem Schraubenkopf 2 gegenüberliegt, und ist an dem Lagerteller 75 festgelegt. Dabei weist die Fassung 51 ein Fassungsgehäuse 54 auf, in dem die elektrischen Kontakte 52, 53 angeordnet sind. Außerdem ist ein Gehäusedeckel 55 vorgesehen, der das Fassungsgehäuse 54 einseitig schließt.

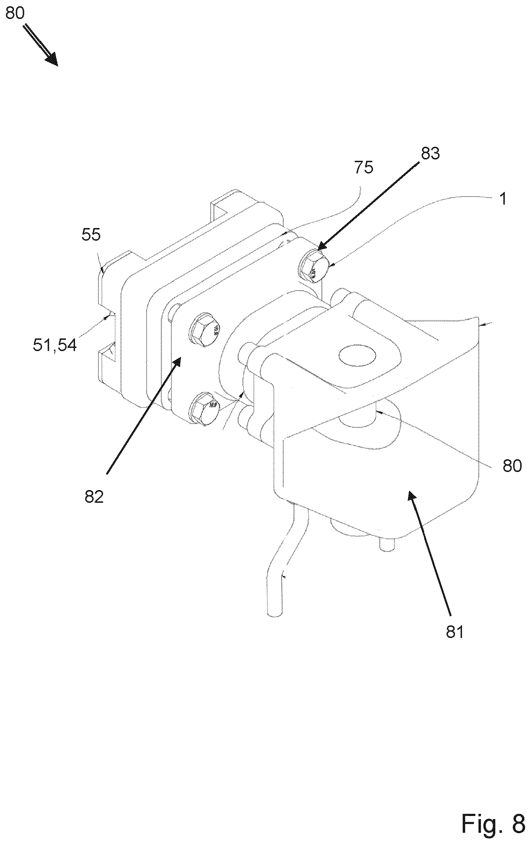

Weiterhin ist in **Fig. 8** eine Maulkupplung 80 mit einem Kupplungsmaul 81 und einem Befestigungsflansch 82 dargestellt. In dem Befestigungsflansch 82 sind vier Schraublöcher 83 ausgebildet, durch die eine sensorische Schraube 1 wie sie vor- und nachstehend angegeben ist, ragt. Zur Ausbildung einer dieser Schraubverbindungen 50 ragt jeweils eine sensorische Schraube 1 durch die Schraublöcher 83 und ist in einen Lagerteller 75 ähnlich dem des zuvor beschriebenen Königszapfens eingeschraubt. Auf der Rückseite sitzen die Fassungen 51 mit den Fassungsgehäusen 54 und Gehäusedeckeln 55.

Die Erfindung ist nicht auf eine der vorbeschriebenen Ausführungsformen beschränkt, sondern in vielfältiger Weise abwandelbar. Beispielsweise kann die Schraubverbindung auch an einem Lagerbock einer Achsschenkellagerung dazu genutzt werden, mittels Erfassung von Dehnungen der sensorischen Schrauben auf fahrdynamische Kräfte zu schließen, die auf die Achse wirken.

Mit den vorgestellten Ausführungsbeispielen ist es nunmehr möglich, ein Verfahren zum Betrieb eines Fahrzeugantriebs eines Fahrzeugs, durchzuführen, bei dem eine Antriebssteuereinheit einen Antriebsparameter des Fahrzeugantriebs, wozu auch die Bremse zählt, in Abhängigkeit eines Messsignals der Messeinrichtung bestimmt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| 1 | Schraube | 81 | Kupplungsmaul |
| 2 | Schraubenkopf | 82 | Befestigungsflansch |
| 3 | Schraubenschaft | 83 | Schraublöcher im Befestigungsflansch |
| 4 | Gewinde | | |
| 5 | Kern | | |
| 6 | Loch | A | Schraubenachse |
| 7 | Signalelektronik | S1 | Außenseite |
| 10 | Messeinrichtung | | |
| 11 | Dehnmesstreifen | | |
| 12 | Kontaktstelle | | |
| 13 | Kontaktstelle | | |
| 14 | Kontaktring | | |
| 15 | Kontaktring | | |
| 16 | Isolatorring | | |
| 17 | Isolatorring | | |
| 18 | elektrischer Isolator | | |
| 19 | Temperatursensor | | |
| 50 | Schraubverbindung | | |
| 51 | Fassung | | |
| 52 | elektrischer Kontakt | | |
| 53 | elektrischer Kontakt | | |
| 54 | Fassungsgehäuse | | |
| 55 | Gehäusedeckel | | |
| 56 | elektrischer Leiter | | |
| 70 | Königszapfen | | |
| 71 | Zapfenwelle | | |
| 72 | Zapfenkopf | | |
| 73 | Befestigungsflansch | | |
| 74 | Schraubloch im Befestigungsflansch | | |
| 75 | Lagerteller | | |
| 76 | Schraubloch im Lagerteller | | |
| 77 | Befestigungsschraube | | |
| 80 | Maulkupplung | | |

## Patentansprüche

1. **Sensorische Schraube** (1) mit einem Schraubenkopf (2), einem sich an den Schraubenkopf (2) entlang einer Schraubenachse (A) anschließenden Schraubenschaft (3) und einem am Schraubenschaft (3) ausgebildeten Gewinde (4), wobei diese eine Messeinrichtung (10) mit einem Dehnmesstreifen (11) aufweist, der entlang oder im inneren des Schraubenschaftes (3) angeordnet ist und Dehnungen des Schraubenschaftes (3) in Richtung der Schraubenachse (A) erfasst, wobei die Messeinrichtung (10) wenigstens zwei elektrische Anschlüsse aufweist, die als Kontaktstellen (12, 13) auf einer Außenseite (S1) der sensorischen Schraube (1) liegen, und insbesondere derart angeordnet sind, dass sie beim Einbringen der sensorischen Schraube (1) in eine Fassung (51) mit zwei korrelierenden elektrischen Kontakten (52, 53) der Fassung (51) in Kontakt treten, **dadurch gekennzeichnet, dass** die Kontaktstellen (12, 13) jeweils an dem Ende des Schraubenschaftes (3) angeordnet sind, das dem Schraubenkopf (2) gegenüberliegt.

2. Sensorische Schraube (1) nach Anspruch 1, **dadurch gekennzeichnet, dass** der Dehnmessstreifen (11) im Kern (5) des Schraubenschaftes (3) angeordnet ist.

3. Sensorische Schraube (1) nach einem der Ansprüche 1 oder 2, **dadurch gekennzeichnet, dass** sie eine Signalelektronik (7) aufweist, wobei die Signalelektronik (7) insbesondere eine Viertelbrücke, einen Signalverstärker und einen Signalwandler aufweist.

4. Sensorische Schraube (1) nach einem der Ansprüche 1 bis 3, **dadurch gekennzeichnet, dass** die Kontaktstellen (12, 13) insbesondere eine elektrisch leitfähige und antistatische Beschichtung aufweisen.

5. Sensorische Schraube (1) nach einem der vorhergehenden Ansprüche, **dadurch gekennzeichnet, dass** die Kontaktstellen (12, 13) jeweils die Schraubenachse (A) ringförmig umgebend am Umfang der sensorischen Schraube (1) ausgebildet sind.

6. Sensorische Schraube (1) nach einem der vorhergehenden Ansprüche, **dadurch gekennzeichnet, dass** wenigstens eine, vorzugsweise alle, der Kontaktstellen (12, 13) durch einen Kontaktring (14, 15) ausgebildet ist, wobei die Kontaktringe (14, 15) durch Isolatorringe (16, 17) voneinander getrennt sind, und wobei die Kontaktringe (14, 15) und die Isolatorringe (16, 17) auf einem elektrischen Isolator (18) sitzen.

7. Sensorische Schraube () nach Anspruch 6, **dadurch gekennzeichnet, dass** der elektrische Isolator (18) an dem Ende des Schraubenschafts (3) angeordnet ist, das dem Schraubenkopf (2) gegenüberliegt.

8. Sensorische Schraube (1) nach einem der vorhergehenden Ansprüche, **dadurch gekennzeichnet, dass** das Gewinde (4) einen größeren Innendurchmesser aufweist als der maximale Abstand der Kontaktstellen (12, 13) von der Schraubenachse (A) beträgt.

9. Sensorische Schraube (1) nach einem der vorhergehenden Ansprüche, **dadurch gekennzeichnet, dass** eine ganz an dem Ende der Schraube (1), das dem Schraubenkopf (2) gegenüberliegt, sitzende Kontaktstelle (13) kappenförmig oder hutförmig ausgebildet ist.

10. Sensorische Schraube (1) nach einem der vorhergehenden Ansprüche, **dadurch gekennzeichnet, dass** die Messeinrichtung (10) einen Temperatursensor (19) aufweist, der die Temperatur des Schraubenschaftes (3) und/oder des Dehnmessstreifens (11) erfasst.

11. **Schraubverbindung** (50) mit einer sensorischen Schraube (1) nach einem der vorhergehenden Ansprüche und einer Fassung (51), wobei die Fassung (51) wenigstens zwei elektrische Kontakte (52, 53) aufweist und jeweils eine der Kontaktstellen (12, 13) der Schraube (1) mit einem der elektrischen Kontakte (52, 53) der Fassung (51) kontaktiert ist, wenn sich die sensorische Schraube (1) in einer Montageposition relativ zur Fassung (51) befindet.

12. Schraubverbindung (50) nach Anspruch 11, **dadurch gekennzeichnet, dass** die zwei elektrischen Kontakte (52, 53) der Fassung (51) durch Kontaktfedern ausgebildet sind.

13. Schraubverbindung (50) nach einem der Ansprüche 11 oder 12, **dadurch gekennzeichnet, dass** die Fassung (51) in der Montageposition an dem Ende des Schraubenschaftes (3) angeordnet ist, das dem Schraubenkopf (2) gegenüberliegt.

14. Schraubverbindung (50) nach einem der Ansprüche 11 bis 13, **dadurch gekennzeichnet, dass** die Fassung (51) ein Fassungsgehäuse (54) aufweist, in dem die elektrischen Kontakte (52, 53) angeordnet sind.

15. Schraubverbindung (50) nach Anspruch 13, **dadurch gekennzeichnet, dass** die Fassung (51) einen Gehäusedeckel (55) aufweist, der das Fassungsgehäuse (54) zumindest einseitig schließt.

16. **Königszapfen** (70) für eine Sattelkupplung, mit einer Zapfenwelle (71), an dessen erstem Ende ein Zapfenkopf (72) angeordnet ist und an dessen zweitem Ende ein Befestigungsflansch (73) angeordnet ist, wobei der Befestigungsflansch (73) wenigstens ein, vorzugsweise wenigstens zwei, weiter bevorzugt wenigstens drei und besonders bevorzugt wenigstens vier Schraublöcher (74) aufweist, und mit wenigstens einer Schraubverbindung (50) nach einem der Ansprüche 11 bis 15, wobei die sensorische Schraube (1) dieser Schraubverbindung (50) durch eines der Schraublöcher (74) ragt.

17. Königszapfen (70) nach Anspruch 16, **dadurch gekennzeichnet, dass** dieser einen Lagerteller (75) aufweist und die sensorische Schraube (1) durch ein Schraubloch (76) im Lagerteller (75) ragt.

18. Königszapfen (70) nach Anspruch 17, **dadurch gekennzeichnet, dass** der Schraubenkopf (2) der sensorischen Schraube (1) auf der Seite des Befestigungsflansches (73) angeordnet ist und die sensorische Schraube (1) aus dem Schraubloch (76) des Lagertellers (75) ragt, wobei die Fassung (51) an dem Ende des Schraubenschafts (3) angeordnet ist, das dem Schraubenkopf (2) gegenüberliegt.

19. Königszapfen (70) nach einem der Ansprüche 17 oder 18, **dadurch gekennzeichnet, dass** die Fassung (51) an dem Lagerteller (75) festgelegt ist.

20. **Maulkupplung** (80) mit einem Kupplungsmaul (81) und einem Befestigungsflansch (82), der wenigstens ein, vorzugsweise wenigstens zwei, weiter bevorzugt wenigstens drei und besonders bevorzugt wenigstens vier Schraublöcher (83) aufweist, und mit wenigstens einer Schraubverbindung (50) nach einem der Ansprüche 11 bis 15, wobei die sensorische Schraube (1) dieser Schraubverbindung (50) durch eines der Schraublöcher (83) ragt.

21. **Verfahren** zum Betrieb eines Fahrzeugantriebs eines Fahrzeugs, wobei das Fahrzeug eine Schraubverbindung nach einem der Ansprüche 11 bis 15, oder einen Königszapfen nach einem der Ansprüche 17 bis 19, oder eine Maulkupplung (80) nach Anspruch 19 aufweist, wobei eine Antriebssteuereinheit einen Antriebsparameter des Fahrzeugantriebs in Abhängigkeit eines Messsignals der Messeinrichtung (10) bestimmt.

## Claims

1. **Sensor screw** (1) having a screw head (2), a screw shaft (3) which adjoins the screw head (2) along a screw axis (A) and a thread (4) which is formed on the screw shaft (3), wherein it has a measurement device (10) having a strain gauge (11) which is arranged along or inside the screw shaft (3) and which detects elongations of the screw shaft (3) in the direction of the screw axis (A), wherein the measurement device (10) has at least two electrical connections which are located as contact locations (12, 13) on an outer side (S1) of the sensor screw (1) and in particular are arranged in such a manner that, when the sensor screw (1) is introduced into a socket (51), they come into contact with two correlating electrical contacts (52, 53) of the socket (51), **characterized in that** the contact locations (12, 13) are arranged in each case at the end of the screw shaft (3) which is opposite the screw head (2).

2. Sensor screw (1) according to Claim 1, **characterized in that** the strain gauge (11) is arranged in the core (5) of the screw shaft (3).

3. Sensor screw (1) according to either of Claims 1 and 2, **characterized in that** it has an electronic signal system (7), wherein the electronic signal system (7) in particular has a quarter bridge, a signal amplifier and a signal converter.

4. Sensor screw (1) according to any one of Claims 1 to 3, **characterized in that** the contact locations (12, 13) have in particular an electrically conductive and anti-static coating.

5. Sensor screw (1) according to any one of the preceding claims, **characterized in that** the contact locations (12, 13) are formed in each case in a state surrounding the screw axis (A) in an annular manner on the circumference of the sensor screw (1).

6. Sensor screw (1) according to any one of the preceding claims, **characterized in that** at least one, preferably all, of the contact locations (12, 13) are formed by a contact ring (14, 15), wherein the contact rings (14, 15) are separated from each other by insulator rings (16, 17), and wherein the contact rings (14, 15) and the insulator rings (16, 17) rest on an electrical insulator (18).

7. Sensor screw (1) according to Claim 6, **characterized in that** the electrical insulator (18) is arranged at the end of the screw shaft (3) which is opposite the screw head (2).

8. Sensor screw (1) according to any one of the preceding claims, **characterized in that** the thread (4) has a greater inner diameter than the maximum spacing of the contact locations (12, 13) from the screw axis (A).

9. Sensor screw (1) according to any one of the preceding claims, **characterized in that** a contact location (13) which is located at the very end of the screw (1) which is opposite the screw head (2) is configured in a cap-like or hat-like manner.

10. Sensor screw (1) according to any one of the preceding claims, **characterized in that** the measurement device (10) has a temperature sensor (19) which detects the temperature of the screw shaft (3) and/or the strain gauge (11).

11. **Screw connection** (50) having a sensor screw (1) according to any one of the preceding claims and a socket (51), wherein the socket (51) has at least two electrical contacts (52, 53), and in each case one of the contact locations (12, 13) of the screw (1) is contacted with one of the electrical contacts (52, 53) of the socket (51) when the sensor screw (1) is located in an assembly position relative to the socket (51).

12. Screw connection (50) according to Claim 11, **characterized in that** the two electrical contacts (52, 53) of the socket (51) are formed by contact springs.

13. Screw connection (50) according to either of Claims 11 and 12, **characterized in that** the socket (51) is arranged in the assembly position at the end of the screw shaft (3) which is opposite the screw head (2).

14. Screw connection (50) according to any one of Claims 11 to 13, **characterized in that** the socket (51) has a socket housing (54) in which the electrical contacts (52, 53) are arranged.

15. Screw connection (50) according to Claim 13, **characterized in that** the socket (51) has a housing cover (55) which closes the socket housing (54) at least at one side.

16. **Kingpin** (70) for a fifth-wheel coupling, having a pin shaft (71) at the first end of which a pin head (72) is arranged and at the second end of which a securing flange (73) is arranged, wherein the securing flange (73) has at least one, preferably at least two, more preferably at least three and in a particularly preferred manner at least four screw holes (74), and having at least one screw connection (50) according to any one of Claims 11 to 15, wherein the sensor screw (1) of this screw connection (50) protrudes through one of the screw holes (74).

17. Kingpin (70) according to Claim 16, **characterized in that** it has a bearing plate (75) and the sensor screw (1) protrudes through a screw hole (76) in the bearing plate (75).

18. Kingpin (70) according to Claim 17, **characterized in that** the screw head (2) of the sensor screw (1) is arranged at the side of the securing flange (73) and the sensor screw (1) protrudes from the screw hole (76) of the bearing plate (75), wherein the socket (51) is arranged at the end of the screw shaft (3) which is opposite the screw head (2).

19. Kingpin (70) according to either of Claims 17 and 18, **characterized in that** the socket (51) is secured to the bearing plate (75).

20. **Open-end coupling** (80) having a coupling jaw (81) and a securing flange (82) which has at least one, preferably at least two, more preferably at least three and in a particularly preferred manner at least four screw holes (83), and having at least one screw connection (50) according to any one of Claims 11 to 15, wherein the sensor screw (1) of this screw connection (50) protrudes through one of the screw holes (83).

21. **Method** for operating a vehicle drive of a vehicle, wherein the vehicle has a screw connection according to any one of Claims 11 to 15, or a kingpin according to any one of Claims 17 to 19, or an open-end coupling (80) according to Claim 19, wherein a drive control unit determines a drive parameter of the vehicle drive depending on a measurement signal of the measurement device (10).

## Revendications

1. Vis sensorielle (1) comprenant une tête de vis (2), une tige de vis (3) se raccordant à la tête de vis (2) le long d'un axe de vis (A) et un filetage (4) formé sur la tige de vis (3), celui-ci possédant un dispositif de mesure (10) avec une jauge de contrainte (11) qui est disposée le long ou à l'intérieur de la tige de vis (3) et qui détecte les dilatations de la tige de vis (3) dans la direction de l'axe de vis (A), le dispositif de mesure (10) possédant au moins deux bornes électriques qui sont disposées sous forme de points de contact (12, 13) sur un côté extérieur (S1) de la vis sensorielle (1) et sont notamment disposées de telle sorte que, lors de l'insertion de la vis sensorielle (1) dans une douille (51), ils entrent en contact avec deux contacts électriques (52, 53) corrélés de la douille (51), **caractérisée en ce que** les points de contact (12, 13) sont respectivement disposés à l'extrémité de la tige de vis (3) qui se trouve à l'opposé de la tête de vis (2).

2. Vis sensorielle (1) selon la revendication 1, **caractérisée en ce que** la jauge de contrainte (11) est disposée dans le noyau (5) de la tige de vis (3).

3. Vis sensorielle (1) selon l'une des revendications 1 ou 2, **caractérisée en ce qu'**elle possède un circuit électronique de signalisation (7), le circuit électronique de signalisation (7) possédant notamment un quart de pont, un amplificateur de signal et un convertisseur de signal.

4. Vis sensorielle (1) selon l'une des revendications 1 à 3, **caractérisée en ce que** les points de contact (12, 13) possèdent notamment un revêtement électriquement conducteur et antistatique.

5. Vis sensorielle (1) selon l'une des revendications précédentes, **caractérisée en ce que** les points de contact (12, 13) sont formés au niveau de la périphérie de la vis sensorielle (1) en entourant respectivement l'axe de vis (A) de manière annulaire.

6. Vis sensorielle (1) selon l'une des revendications précédentes, **caractérisée en ce qu'**au moins un, de préférence tous les points de contact (12, 13) sont formés par une bague de contact (14, 15), les bagues de contact (14, 15) étant séparées les unes des autres par des bagues isolantes (16, 17) et les bagues de contact (14, 15) ainsi que les bagues isolantes (16, 17) reposant sur un isolateur électrique (18).

7. Vis sensorielle (1) selon la revendication 6, **caractérisée en ce que** l'isolateur électrique (18) est disposé à l'extrémité de la tige de vis (3) qui se trouve à l'opposé de la tête de vis (2).

8. Vis sensorielle (1) selon l'une des revendications précédentes, **caractérisée en ce que** le filetage (4) présente un diamètre intérieur supérieur à la distance maximale entre les points de contact (12, 13) et l'axe de la vis (A).

9. Vis sensorielle (1) selon l'une des revendications précédentes, **caractérisée en ce qu'**un point de contact (13) qui est situé complètement à l'extrémité de la vis (1) qui se trouve à l'opposé de la tête de vis (2) est réalisé en forme de capuchon ou de chapeau.

10. Vis sensorielle (1) selon l'une des revendications précédentes, **caractérisée en ce que** le dispositif de mesure (10) possède un capteur de température (19) qui détecte la température de la tige de vis (3) et/ou de la jauge de contrainte (11).

11. Assemblage vissé (50) comprenant une vis sensorielle (1) selon l'une des revendications précédentes et une douille (51), la douille (51) possédant au moins deux contacts électriques (52, 53) et l'un des points de contact (12, 13) de la vis (1) étant respectivement mis en contact avec l'un des contacts électriques (52, 53) de la douille (51) lorsque la vis sensorielle (1) se trouve dans une position de montage par rapport à la douille (51).

12. Assemblage vissé (50) selon la revendication 11, **caractérisé en ce que** les deux contacts électriques (52, 53) de la douille (51) sont formés par des ressorts de contact.

13. Assemblage vissé (50) selon l'une des revendications 11 ou 12, **caractérisé en ce que** la douille (51), en position de montage, est disposée à l'extrémité de la tige de vis (3) qui se trouve à l'opposé à la tête de vis (2).

14. Assemblage vissé (50) selon l'une des revendications 11 à 13, **caractérisé en ce que** la douille (51) possède un boîtier de douille (54) dans lequel sont disposés les contacts électriques (52, 53).

15. Assemblage vissé (50) selon la revendication 13, **caractérisé en ce que** la douille (51) possède un couvercle de boîtier (55) qui ferme le boîtier de douille (54) au moins d'un côté.

16. Pivot central (70) pour un attelage à sellette, comprenant un arbre de pivot (71) à la première extrémité duquel est disposée une tête de pivot (72) et à la deuxième extrémité duquel est disposée une bride de fixation (73), la bride de fixation (73) possédant au moins un, de préférence au moins deux, mieux encore au moins trois et de manière particulièrement préférée au moins quatre trous de vis (74) et comprenant au moins un assemblage vissé (50) selon l'une des revendications 11 à 15, la vis sensorielle (1) de cet assemblage vissé (50) faisant saillie à travers l'un des trous de vis (74).

17. Pivot central (70) selon la revendication 16, **caractérisé en ce que** celui-ci possède un plateau d'appui (75) et la vis sensorielle (1) fait saillie à travers un trou fileté (76) dans le plateau d'appui (75).

18. Pivot central (70) selon la revendication 17, **caractérisé en ce que** la tête de vis (2) de la vis sensorielle (1) est disposée sur le côté de la bride de fixation (73) et que la vis sensorielle (1) fait saillie hors du trou de vis (76) du plateau d'appui (75), la douille (51) étant disposée au niveau de l'extrémité de la tige de vis (3) qui se trouve à l'opposé de la tête de vis (2).

19. Pivot central (70) selon l'une des revendications 17 ou 18, **caractérisé en ce que** la douille (51) est fixée au plateau d'appui (75).

20. Accouplement à mâchoires (80) comprenant une mâchoire d'accouplement (81) et une bride de fixation (82) qui possède au moins un, de préférence au moins deux, encore de préférence au moins trois et plus préférentiellement au moins quatre trous de vis (83), et comprenant au moins un assemblage vissé (50) selon l'une des revendications 11 à 15, la vis sensorielle (1) de cet assemblage vissé (50) faisant saillie à travers l'un des trous de vis (83).

21. Procédé pour faire fonctionner une propulsion de véhicule d'un véhicule, le véhicule possédant un assemblage vissé selon l'une des revendications 11 à 15, ou un pivot central selon l'une des revendications 17 à 19, ou un accouplement à mâchoires (80) selon la revendication 19, une unité de commande d'entraînement déterminant un paramètre d'entraînement de la propulsion de véhicule en fonction d'un signal de mesure du dispositif de mesure (10).
